(19) Europäisches Patentamt

European Patent Office

Office européen des brevets

(11) EP 1 051 920 A2

## (12) EUROPEAN PATENT APPLICATION

(43) Date of publication:
15.11.2000 Bulletin 2000/46

(51) Int. Cl.$^7$: **A23L 1/36**, A23L 1/39

(21) Application number: 00109902.7

(22) Date of filing: 10.05.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **11.05.1999 DE 19921859**

(71) Applicants:
• **Bestfoods**
**Englewood Cliffs, NJ 07632 (US)**
Designated Contracting States:
**BE CH DK ES FI FR GB GR IE IT LI LU MC NL PT SE AT CY**

• **Bestfoods Deutschland GmbH & Co. OHG**
**74074 Heilbronn (DE)**
Designated Contracting States:
**DE**

(72) Inventor: **Rietmann, Holger**
**8243 Altdorf (CH)**

(74) Representative:
**Lederer, Franz, Dr. et al**
**Lederer, Keller & Riederer**
**Patentanwälte**
**Prinzregentenstrasse 16**
**80538 München (DE)**

(54) **Process for producing sesame products**

(57) The invention relates to a process for producing room temperature storable ready-to-eat sesame products, in particular tehina products. In this process a raw sesame seed paste is mixed with water and customary flavourings, then sterilized for 5-20 minutes at a temperature of 115-130°C, preferably 120-125°C, and then cooled to a temperature below 30°C and packaged aseptically, the batch being homogenized using a homogenizer at a point in time when it is at the sterilization temperature.

EP 1 051 920 A2

**Description**

The invention relates to a process for producing room-temperature-storable, ready-to-eat sesame products, in particular tehina products.

Tehina is a food which is popular in particular in the countries of the Middle East, and is based on a sesame seed paste. Sesame seeds are shelled, dried, roasted and ground to form a free-flowing paste. The paste consists of about 45-63% oil and 16-32% protein and, after adding water and flavourings, is used as tehina sauce. If some of the sesame seed paste is replaced by a chickpea paste, a product termed hummus sauce is obtained, whereas the co-use of an aubergine paste leads to the product called moutabal sauce.

Raw tehina paste, because of its low water content, is storable relatively well, but in contrast the tehina products which, such as tehina sauce, have a high water content, have a poor keeping quality. In the consuming countries, therefore, a tehina sauce is generally made by the housewife from the sesame seed paste for immediate consumption. Although industrial products are on the market, they do not achieve the flavour quality of home-made sauces.

There has been no lack of attempts to improve the keeping quality of such products.

The addition of chemical preservatives is not desirable and changes the taste.

US Patent 5,529,802 shows that sterilization of tehina sauce prior to its packaging leads to an impairment in flavour. This is presumably due to the fact that sesame seed paste can only be emulsified with difficulty, and a relatively long sterilization of the non-homogeneous sauce leads to non-uniform heat stress which could be made responsible for the impairment in flavour. US Patent 5,529,802 therefore proposes sterilizing the raw sesame seed paste separately from the aqueous phase comprising the flavourings and only afterwards mixing these two components. However, it has been found that this process is not suitable, because the raw sesame seed paste, because of its low water content, is difficult to sterilize effectively, rather, inadequately inactivated microorganisms remain which then spoil the product.

WO 93/16608 discloses a process for preparation of food from proteinaceous grains but does not give any hint how to solve the present problem.

CN 1119072 discloses a health-care nutritive flavouring comprising sesame paste by pre-treatment of the raw materials, portioning, mixing, homogenising and mixing with perfume.

CN 107 88 65 discloses an ice cream bar containing black sesame paste comprising uniformly mixing black sesame paste and white sesame paste, adding cream, milk powder and emulsifier. The mixture is subjected to homogenisation, emulsification, sterilisation, moulding and freezing.

It has been observed that commercially available products usually have a substantially lower pH of 4.2-4.8 in contrast to freshly home-made tehina sauce which generally has a pH of 5.4-5.9. Although this low pH of commercially available products improves their keeping quality, it impairs the taste of the products.

It has now been found that an effective sterilization of tehina sauce, that is an aqueous emulsion of sesame seed paste, can be carried out without impairing the taste of the product if, during the heating, there is effective homogenization of the mixture.

The process according to the invention is thus characterized in that a raw sesame seed paste is mixed with water and customary flavourings, then sterilized for 5-20 minutes at a temperature of 115-130°C, preferably 120-125°C, and then cooled to a temperature below 30°C and packaged aseptically, the batch being homogenized using a homogenizer at a point in time when it is at the sterilization temperature. Preferably, the homogenization takes place at the beginning of or during the sterilization stage.

The heating stage begins with heating the mixture to the sterilization temperature. For the sterilization, the mixture is kept at the sterilization temperature for 5-20 minutes, preferably 8-18 minutes. The holding step can be, for example, 15 minutes. The mixture is then cooled to below 30°C.

If the process is not carried out in a batch process, but continuously, an effective sterilization can also be performed in a shorter time of 5-9 minutes.

In the process according to the invention, a product pH of 5.0-6.0, preferably 5.4-5.9, as is usual in home-made products, can be achieved.

In a first step, the raw sesame seed paste is mixed with water in a weight ratio of paste to water of 1:(1.5-3), preferably 1:(1.8-2.5).

Flavourings which are added are customarily salt, sugar, garlic and/or citric acid, the last possibly in the form of lemon juice. The flavourings are expediently added in aqueous solution, in particular as a solution in the water component, but they can also be admixed in powder form if their content is not too high, generally below 4% by weight. This is the case with garlic, for example.

It has proved to be expedient to carry out the process in a closed room, and to establish a reduced pressure prior to the heating, because this prevents admixture of air, which can cause the oil to become rancid. The pressure is preferably 0.05-0.3 bar, corresponding to a reduced pressure of -0.7 to -0.95 bar.

The mixing can be performed in a mixing tank equipped with an agitator.

Suitable apparatuses for the homogenization are known. Such an apparatus consists, for example, of a perforated disc rotating at high speed.

The reduced pressure is maintained only initially, with increasing heating, due to the water heating a pressure build up takes place and continuously evacuating the pressure is avoided. During the sterilization, therefore, a superatmospheric pressure can prevail. On cooling, a vacuum forms again, which counteracts air ingress.

The tehina sauce thus produced has good keeping quality at room temperature.

Surprisingly, in this manner, not only can a product with improved keeping quality be produced, but rather a product which more closely resembles a home-made product in flavour than the commercial products which have been obtainable hitherto.

Products such as hummus (tehina with chickpeas) and moutabal (tehina with aubergines) can also be produced by the same process.

**Example 1**

Use was made of a sesame seed paste having a water content of less than 0.1% by weight. An aqueous emulsion was produced from the following constituents:

| | | |
|---|---|---|
| 12.00 kg | (30.0% by weight) | sesame seed paste |
| 26.52 kg | (66.3% by weight) | water |
| 0.48 kg | ( 1.2% by weight) | salt |
| 0.40 kg | ( 1.0% by weight) | sugar |
| 0.60 kg | ( 1.5% by weight) | lemon juice. |
| 40.00 kg | | |

All constituents were mixed in a mixer, at the same time a reduced pressure of from -0.8 to -0.9 bar being set. The mixture was then heated to 121°C. This temperature was maintained for 15 minutes and the product was then cooled to below 30°C, whereupon the vacuum was abolished. During the entire heating stage, the mixture was constantly mixed and homogenized using a perforated disc homogenizer (Krieger Moltomat MMU 50). The product was then immediately packaged under aseptic conditions.

The product had a pH of 5.4.

**Example 2**

100 kg of the same batch as in Example 1 were mixed in a mixer and preheated to 85°C. The mixture was then continuously sterilized at 121°C for 6 minutes in a scraped-surface heat exchanger and immediately passed through a homogenizer (Alfa Laval SHL 15 5910307), then continuously cooled to below 30°C and aseptically packaged. The product has a pH of 5.4.

**Example 3**

An aqueous emulsion was produced by mixing

16.2% by weight    sesame seed paste

| | |
|---|---|
| 73.9% by weight | chickpea paste (water content about 80%) |
| 1.2% by weight | natural emulsifier |
| 7.9% by weight | sunflower seed oil |
| 0.8% by weight | garlic powder. |

The constituents were heated in the mixer to 121°C. The temperature was held for 15 minutes and the product was then cooled to below 30°C. During this heating, the mixture was subjected to a homogenization using the same homogenizer as was used in Example 1. The product was then aseptically packaged. A hummus sauce which had good keeping quality and a pH of 5.6 was obtained.

**Claims**

1. Process for producing a room-temperature-storable, ready-to-eat sesame product, characterized in that a raw sesame seed paste is mixed with water and customary flavourings, then sterilized for 5-20 minutes at a temperature of 115-130°C, preferably 120-125°C, and then cooled to a temperature below 30°C and packaged aseptically, the batch being homogenized using a homogenizer at a point in time when it is at the sterilization temperature.

2. Process according to Claim 1, characterized in that a tehina product is produced which has a pH of 5.0-6.0, preferably 5.4-5.9.

3. Process according to one of the preceding claims, characterized in that the raw sesame seed paste is mixed with water in a weight ratio of paste to water of 1:(1.5-3), preferably 1:(1.8-2.5).

4. Process according to one of the preceding claims, characterized in that the flavourings added are salt, sugar, garlic and/or citric acid.

5. Process according to one of the preceding claims, characterized in that the flavourings are added as a solution in the water component.

6. Process according to one of the preceding claims, characterized in that it is carried out in a closed room and a reduced pressure is established prior to the heating.

7. Process according to one of the preceding claims for producing a hummus sauce, characterized in that a portion of the sesame seed paste is replaced by a chickpea paste.

8. Process according to one of Claims 1-6 for producing a moutabal sauce, characterized in that a portion of the sesame seed paste is replaced by an aubergine paste.